(19) Europäisches Patentamt
European Patent Office
Office européen des brevets

(11) **EP 4 249 378 A1**

(12) **EUROPEAN PATENT APPLICATION**

(43) Date of publication:
**27.09.2023   Bulletin 2023/39**

(21) Application number: **23156900.5**

(22) Date of filing: **15.02.2023**

(51) International Patent Classification (IPC):
**B64D 13/06** (2006.01)          **F24F 8/60** (2021.01)

(52) Cooperative Patent Classification (CPC):
**B64D 13/06; F24F 8/60;** B64D 2013/0681

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.03.2022   US 202263323266 P**

(71) Applicant: **Hamilton Sundstrand Corporation
Charlotte, NC 28217-4578 (US)**

(72) Inventors:
• **MUGURUSA, Diego S.
North Haven, CT, 06473 (US)**
• **HIMMELMANN, Ashley
Hartford, CT, 06103 (US)**

(74) Representative: **Dehns
St. Bride's House
10 Salisbury Square
London EC4Y 8JD (GB)**

(54) **VEHICLE CABIN TOTAL PRESSURE AND OXYGEN CONCENTRATION CONTROL**

(57)     An environmental control system in a vehicle includes a pressurized tank (115) of nitrox, which is a mixture of nitrogen and oxygen, and a delivery valve (150) to block or allow a flow of the nitrox from the pressurized tank to a cabin of the vehicle. The environmental control system also includes a controller (105) to control the delivery valve based on a total pressure or an oxygen partial pressure in the cabin.

FIG. 1

**Description**

CROSS-REFERENCE TO RELATED APPLICATIONS

This application claims the benefit of U.S. Provisional Application No. 63/323,266 filed March 24, 2022.

BACKGROUND

Exemplary embodiments pertain to the art of vehicle cabin environmental control and, in particular, to vehicle cabin total pressure and oxygen concentration control.

Environmental controls are important in many environments (e.g., homes, businesses, vehicles). In an aircraft or space vehicle, cabin pressure and oxygen concentration must be controlled along with temperature and humidity. Unlike a terrestrial habitat or vehicle, which is constantly replenished with oxygenated air, an aircraft or space vehicle must have oxygen added as it is depleted through breathing or leaks. The concentration of oxygen must also be controlled in view of the pressure that is maintained in the vehicle cabin.

BRIEF DESCRIPTION

In one aspect, an environmental control system in a vehicle includes a pressurized tank of nitrox, which is a mixture of nitrogen and oxygen, and a delivery valve to block or allow a flow of the nitrox from the pressurized tank to a cabin of the vehicle. The environmental control system also includes a controller to control the delivery valve based on a total pressure or an oxygen partial pressure in the cabin.

In embodiments, the environmental control system also include a cabin pressure sensor to indicate the total pressure (*Ptotal*) in the cabin and a cabin oxygen sensor configured to indicate oxygen concentration (*%O$_2$*) in the cabin.

In embodiments, the controller determines the oxygen partial pressure *ppO$_2$* as:

$$ppO_2 = Ptotal * \%O_2.$$

In embodiments, the environmental control system also includes a pressure regulator to reduce a pressure of the nitrox in the pressurized tank prior to delivery of the nitrox to the cabin of the vehicle via the delivery valve.

In embodiments, the environmental control system also includes a vent valve to vent the nitrox to an external atmosphere based on a failure of the pressure regulator.

In embodiments, the environmental control system also includes a relief valve to automatically open a flow from the cabin to an external atmosphere based on the total pressure in the cabin exceeding a threshold value.

In embodiments, the environmental control system also includes an external pressure sensor to indicate pressure in the external atmosphere and an isolation valve configured to shut off the flow from the cabin to the external atmosphere based on a fault in the relief valve indicated by the total pressure in the cabin being less than the pressure in the external atmosphere.

In embodiments, the controller controls the delivery valve to allow the flow of the nitrox from the pressurized tank to the cabin based on either the total pressure in the cabin being below a defined lower limit of the total pressure or the oxygen partial pressure in the cabin being below a defined lower limit of the oxygen partial pressure.

In embodiments, the controller controls the delivery valve to block the flow of the nitrox from the pressurized tank to the cabin based on either the total pressure in the cabin being above a defined upper limit of the total pressure or the oxygen partial pressure in the cabin being above a defined upper limit of the oxygen partial pressure.

In embodiments, the vehicle is an aircraft or a spacecraft.

In another aspect, a method of assembling an environmental control system for a vehicle includes obtaining a pressurized tank of nitrox, which is a mixture of nitrogen and oxygen, and arranging a delivery valve to block or allow a flow of the nitrox from the pressurized tank to a cabin of the vehicle. The method also includes configuring a controller to control the delivery valve based on a total pressure or an oxygen partial pressure in the cabin.

In embodiments, the method also includes arranging a cabin pressure sensor to indicate the total pressure (*Ptotal*) in the cabin and a cabin oxygen sensor to indicate oxygen concentration (*%O$_2$*) in the cabin.

In embodiments, the configuring the controller includes the controller determining the oxygen partial pressure *ppO$_2$* as:

$$ppO_2 = Ptotal * \%O_2.$$

In embodiments, the method also includes arranging a pressure regulator to reduce a pressure of the nitrox in the pressurized tank prior to delivery of the nitrox to the cabin of the vehicle via the delivery valve.

In embodiments, the method also includes arranging a vent valve to vent the nitrox to an external atmosphere based on a failure of the pressure regulator.

In embodiments, the method also includes arranging a relief valve to automatically open a flow from the cabin to an external atmosphere based on the total pressure in the cabin exceeding a threshold value.

In embodiments, the method also includes arranging an external pressure sensor to indicate pressure in the external atmosphere and an isolation valve to shut off the flow from the cabin to the external atmosphere based on a fault in the relief valve indicated by the total pressure in the cabin being less than the pressure in the external atmosphere.

In embodiments, the configuring the controller includes the controller controlling the delivery valve to allow the flow of the nitrox from the pressurized tank to the cabin based on either the total pressure in the cabin being below a defined lower limit of the total pressure or the oxygen partial pressure in the cabin being below a defined lower limit of the oxygen partial pressure.

In embodiments, the configuring the controller includes the controller controlling the delivery valve to block the flow of the nitrox from the pressurized tank to the cabin based on either the total pressure in the cabin being above a defined upper limit of the total pressure or the oxygen partial pressure in the cabin being above a defined upper limit of the oxygen partial pressure.

In embodiments, the vehicle is an aircraft or a spacecraft.

## BRIEF DESCRIPTION OF THE DRAWINGS

The following descriptions should not be considered limiting in any way. With reference to the accompanying drawings, like elements are numbered alike:

FIG. 1 is a block diagram of an environmental control system in a vehicle according to one or more embodiments; and

FIG. 2 is a process flow of a method of controlling the total pressure and oxygen concentration in the vehicle cabin according to one or more embodiments.

## DETAILED DESCRIPTION

A detailed description of one or more embodiments of the disclosed apparatus and method are presented herein by way of exemplification and not limitation with reference to the Figures.

Embodiments of the systems and methods detailed herein relate to vehicle cabin total pressure and oxygen concentration control. Generally, the total pressure in a vehicle cabin on the earth's surface is about 14.7 parts per square inch absolute (psia) (101 kPa) and the oxygen concentration in air is about 21 percent. Ambient pressure decreases as altitude increases. Thus, during accent of the vehicle, as external pressure decreases, the total pressure in the vehicle cabin may be decreased (e.g., to 10 psia (69 kPa)) to maintain a given differential pressure between the external and vehicle cabin pressures while also ensuring that the total pressure in the vehicle cabin exceeds external pressure. As the total pressure in the vehicle cabin is decreased, the oxygen concentration must be increased to maintain a habitable environment for occupants of the vehicle cabin. During descent, as the external pressure increases with decreasing altitude, the total pressure in the vehicle cabin must be increased. The oxygen concentration may be decreased correspondingly or maintained at the higher concentration.

Prior approaches to implementing environmental control in a vehicle cabin involved using a dual gas delivery system. High pressure oxygen and nitrogen were stored in separate tanks and their release was controlled to obtain a desired total pressure and oxygen concentration in the vehicle cabin. As detailed, the environmental control system according to one or more embodiments uses a single gas, a nitrogen/oxygen mixture (nitrox), rather than the dual gas system. The delivery of nitrox into the vehicle cabin is controlled to increase total pressure and/or to increase the concentration of oxygen.

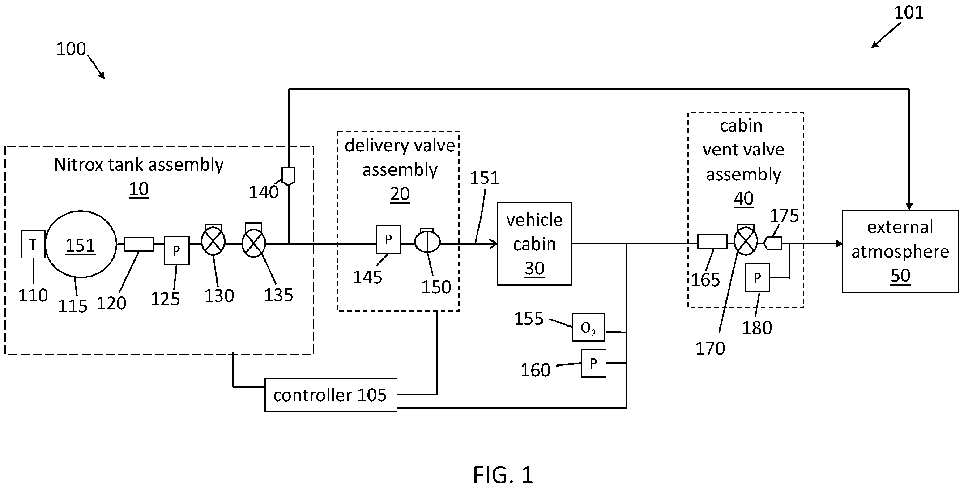

FIG. 1 is a block diagram of an environmental control system 100 in a vehicle 101 according to one or more embodiments. Generally, the environmental control system 100 includes a nitrox tank assembly 10 and a delivery valve assembly 20 to deliver nitrox 151 into the vehicle cabin 30, and a cabin vent valve assembly 40 to release pressure to the external atmosphere 50. Delivery of the nitrox 151 to the vehicle cabin 30 is controlled by a controller 105, as detailed.

The nitrox tank assembly 10 includes a nitrox temperature sensor 110 and nitrox pressure senor 125 that facilitate a calculation of the remaining nitrox 151 in the tank 115. The tank 115 may be a pressurized tank that maintains a pressure of about 3000 to 6000 psia (2.0684e+7 - 4. 1369e+7 Pa), for example. A particulate filter 120 may be included at the outlet of the tank 115. An isolation valve 130 is used to shut off the flow of nitrox 151 in case of a failure, and a pressure regulator 135 facilitates reduction of the pressure of the nitrox 151 from the pressure in the tank 115 (e.g.,

3000-6000 psia (2.0684e+7 - 4.1369e+7 Pa)) to an intermediate pressure (e.g., 30-100 psi (207kPa - 689 kPa)). In case of a failure in the pressure regulator 135, a vent valve 140 vents nitrox 151 (which is at a higher pressure than the intermediate pressure) to the external atmosphere 50 and thereby prevents over-pressurization of the vehicle cabin 30. The nitrox 151 may be 35 percent (%) oxygen $O_2$ and 65% nitrogen $N_2$, for example. This is further discussed.

The delivery valve assembly 20 includes a downstream pressure sensor 145 that monitors pressure of the nitrox 151 leaving the nitrox tank assembly 10 following the pressure decrease by the pressure regulator 135. Thus, the downstream pressure sensor 145 provides an indication of the health of the pressure regulator 135 and may be a basis for operation of the vent valve 140. The delivery valve assembly 20 also includes a delivery valve 150 that is controlled by the controller 105 to supply nitrox 151 to the vehicle cabin 30. The delivery valve 150 may be a two-way solenoid valve that is normally closed and may be controlled to open to deliver the nitrox 151 to the vehicle cabin 30.

A cabin oxygen sensor 155 and a cabin pressure sensor 160 facilitate monitoring of oxygen partial pressure and total pressure in the vehicle cabin 30 and are used by the controller 105 to control the delivery valve 150. The cabin oxygen sensor 155 indicates the concentration of oxygen ($\%O_2$) in the vehicle cabin 30, and the cabin pressure sensor 160 indicates the total pressure ($Ptotal$) in the vehicle cabin 30. Oxygen partial pressure ($ppO_2$) may be determined from the concentration of oxygen ($\%O_2$) and the total pressure ($Ptotal$) as:

$$ppO_2 = Ptotal * \%O_2 \qquad\qquad [EQ.\ 1]$$

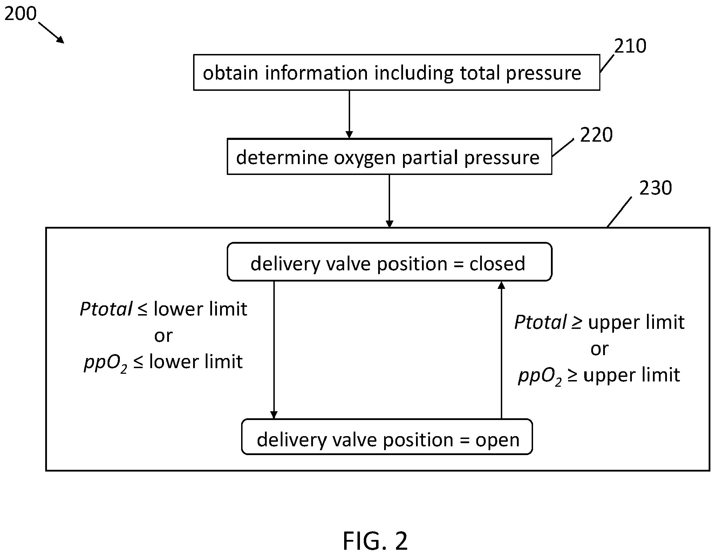

Operation of the controller 105 based on the oxygen partial pressure ($ppO_2$) and total pressure ($Ptotal$) is further discussed with reference to FIG. 2. Generally, the controller 105 causes nitrox 151 to be delivered into the vehicle cabin 30 when either the oxygen partial pressure ($ppO_2$) or total pressure ($Ptotal$) needs to be increased. In this regard, the percentage of oxygen in the nitrox 151 (e.g., 35 %) may be greater than the maximum desired oxygen partial pressure ($ppO_2$) to prevent the total pressure ($Ptotal$) from increasing too much when oxygen partial pressure ($ppO_2$) needs to be increased. However, this criterion must be balanced with the fact that too high a percentage of oxygen in the nitrox 151 may result in over-enriching the vehicle cabin 30 with oxygen.

The cabin vent valve assembly 40 may include a filter 165. A relief valve 175 of the cabin vent valve assembly 40 automatically opens, as needed. That is, the relief valve 175 may be a mechanically operated valve that opens based on a particular pressure being exceeded. According to alternate embodiments, the relief valve 175 may also be controlled by the controller 105, like the delivery valve 150. The relief valve 175 maintains a pressure difference between the total pressure in the vehicle cabin 30 (measured by the cabin pressure sensor 160) and external pressure (measured by the external pressure sensor 180) within a predefined range by opening when the total pressure in the vehicle cabin 30 is too high. When the total pressure in the vehicle cabin 30 is too low, nitrox 151 is delivered via the delivery valve 150 based on control by the controller 105. An isolation valve 170 of the cabin vent valve assembly 40 shuts off flow from the vehicle cabin 30 to the external atmosphere 50 in case of a fault in the relief valve 175. This prevents the total pressure in the vehicle cabin 30 from falling below the pressure of the external atmosphere 50.

FIG. 2 is a process flow of a method 200 of controlling the delivery valve 150 to control the total pressure and oxygen concentration (reflected by oxygen partial pressure) in the vehicle cabin 30 according to one or more embodiments. The processes shown in FIG. 2 may be performed by the controller 105. The controller 105 may include one or more memory devices and processors to implement the control functionality. At block 210, the processes include obtaining information including total pressure in the vehicle cable 30. The processes include obtaining the concentration of oxygen ($\%O_2$) in the vehicle cabin 30 from the cabin oxygen sensor 155 and obtaining the total pressure ($Ptotal$) in the vehicle cabin 30 from the cabin pressure sensor 160.

At block 220, determining oxygen partial pressure ($ppO_2$) refers to the implementing the computation shown in EQ. 1. At block 230, controlling the delivery valve 150 is based on the total pressure $Ptotal$ and the oxygen partial pressure $ppO_2$ in the vehicle cabin 30, as shown. Specifically, the total pressure $Ptotal$ and the oxygen partial pressure $ppO_2$ in the vehicle cabin 30 are each maintained within upper and lower limits. These limits may change based on altitude (e.g., the total pressure $Ptotal$ upper limit may be lower at higher altitudes) or may be interrelated (e.g., the oxygen partial pressure $ppO_2$ (reflecting oxygen concentration) may decrease with decreased total pressure $Ptotal$).

As shown in FIG. 2, when either the total pressure $Ptotal$ or the oxygen partial pressure $ppO_2$ in the vehicle cabin 30 is below its defined lower limit, the controller 105 may control the delivery valve 150 to open (or remain open) and thereby allow the flow of nitrox 151 into the vehicle cabin 30. When either the total pressure $Ptotal$ or the oxygen partial pressure $ppO_2$ in the vehicle cabin 30 is above its defined upper limit, the controller 105 may control the delivery valve 150 to close (or remain closed) and thereby prevent the flow of nitrox 151 into the vehicle cabin 30. As previously noted, when the total pressure $Ptotal$ in the vehicle cabin 30 exceeds the upper limit (or a different, higher threshold value), the relief valve 175 may vent air from the vehicle cabin 30 to the external atmosphere 50 to prevent over-pressurization of the vehicle cabin 30.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. An environmental control system in a vehicle, the environmental control system comprising:

   a pressurized tank (115) of nitrox, which is a mixture of nitrogen and oxygen;
   a delivery valve (150) configured to block or allow a flow of the nitrox (151) from the pressurized tank to a cabin of the vehicle; and
   a controller (105) configured to control the delivery valve based on a total pressure or an oxygen partial pressure in the cabin.

2. The environmental control system according to claim 1, further comprising a cabin pressure sensor (160) configured to indicate the total pressure ($Ptotal$) in the cabin and a cabin oxygen sensor configured to indicate oxygen concentration ($\%O_2$) in the cabin.

3. The environmental control system according to claim 2, wherein the controller is configured to determine the oxygen partial pressure $ppO_2$ as:

$$ppO_2 = Ptotal * \%O_2.$$

4. The environmental control system according to claim 1, 2 or 3, further comprising a pressure regulator (135) configured to reduce a pressure of the nitrox in the pressurized tank prior to delivery of the nitrox to the cabin of the vehicle via the delivery valve.

5. The environmental control system according to claim 4, further comprising a vent valve (140) configured to vent the nitrox to an external atmosphere based on a failure of the pressure regulator.

6. The environmental control system according to any preceding claim, further comprising a relief valve (175) configured to automatically open a flow from the cabin to an external atmosphere based on the total pressure in the cabin exceeding a threshold value.

7. The environmental control system according to claim 6, further comprising an external pressure sensor configured to indicate pressure in the external atmosphere (50) and an isolation valve (170) configured to shut off the flow from the cabin to the external atmosphere based on a fault in the relief valve indicated by the total pressure in the cabin being less than the pressure in the external atmosphere.

8. The environmental control system according to any preceding claim, wherein the controller is configured to control the delivery valve to allow the flow of the nitrox from the pressurized tank to the cabin based on either the total pressure in the cabin being below a defined lower limit of the total pressure or the oxygen partial pressure in the cabin being below a defined lower limit of the oxygen partial pressure; or wherein the controller is configured to control the delivery valve to block the flow of the nitrox from the pressurized tank to the cabin based on either the total pressure in the cabin being above a defined upper limit of the total pressure or the oxygen partial pressure in the cabin being above a defined upper limit of the oxygen partial pressure.

9. The environmental control system according to any preceding claim, wherein the vehicle is an aircraft or a spacecraft.

10. A method of assembling an environmental control system for a vehicle, the method comprising:

   obtaining a pressurized tank (115) of nitrox, which is a mixture of nitrogen and oxygen;
   arranging a delivery valve (150) to block or allow a flow of the nitrox from the pressurized tank to a cabin of the vehicle; and
   configuring a controller (105) to control the delivery valve based on a total pressure or an oxygen partial pressure in the cabin.

11. The method according to claim 10, further comprising arranging a cabin pressure sensor (160) to indicate the total pressure ($Ptotal$) in the cabin and a cabin oxygen sensor to indicate oxygen concentration ($\%O_2$) in the cabin; and optionally wherein the configuring the controller includes the controller determining the oxygen partial pressure $ppO_2$ as:

$$ppO_2 = Ptotal * \%O_2.$$

12. The method according to claim 10 or 11, further comprising arranging a pressure regulator (135) to reduce a pressure of the nitrox in the pressurized tank prior to delivery of the nitrox to the cabin of the vehicle via the delivery valve; and optionally further comprising arranging a vent valve (140) to vent the nitrox to an external atmosphere based on a failure of the pressure regulator.

13. The method according to any of claims 10 to 12, further comprising arranging a relief valve (175) to automatically open a flow from the cabin to an external atmosphere based on the total pressure in the cabin exceeding a threshold value.

14. The method according to claim 13, further comprising arranging an external pressure sensor to indicate pressure in the external atmosphere (50) and an isolation valve to shut off the flow from the cabin to the external atmosphere based on a fault in the relief valve indicated by the total pressure in the cabin being less than the pressure in the external atmosphere.

15. The method according to any of claims 10 to 14, wherein the configuring the controller includes the controller controlling the delivery valve to allow the flow of the nitrox from the pressurized tank to the cabin based on either the total pressure in the cabin being below a defined lower limit of the total pressure or the oxygen partial pressure in the cabin being below a defined lower limit of the oxygen partial pressure, or wherein the configuring the controller includes the controller controlling the delivery valve to block the flow of the nitrox from the pressurized tank to the cabin based on either the total pressure in the cabin being above a defined upper limit of the total pressure or the oxygen partial pressure in the cabin being above a defined upper limit of the oxygen partial pressure.

FIG. 1

EP 4 249 378 A1

200

FIG. 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/115565 A1 (GEARY ROBERT [US]) 2 June 2005 (2005-06-02) | 1,4,9,10 | INV. B64D13/06 |
| A | * paragraphs [0043], [0047]; claims; figures * | 2,3,5-8, 11-15 | F24F8/60 |
| X | US 5 791 982 A (CURRY MICHAEL J [CA] ET AL) 11 August 1998 (1998-08-11) | 1,4, 8-10,15 | |
| A | * column 2, lines 26-32 * <br> * column 3, lines 1-2,42-47 * <br> * column 4, lines 15-18; claims; figures * | 2,3,5-7, 11-14 | |
| X | US 4 057 205 A (VENSEL RICHARD R) 8 November 1977 (1977-11-08) | 1,4, 8-10,15 | |
| A | * column 4, line 18 – column 6, line 43; figures * | 2,3,5-7, 11-14 | |
| A | US 2004/112211 A1 (MEIRAV UDI [US]) 17 June 2004 (2004-06-17) * abstract * | 1-15 | |
| | | | **TECHNICAL FIELDS SEARCHED (IPC)** <br><br> B64D <br> F24F |

The present search report has been drawn up for all claims

| Place of search | Date of completion of the search | Examiner |
|---|---|---|
| Munich | 14 July 2023 | Salentiny, Gérard |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

                                                      

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 23 15 6900

This annex lists the patent family members relating to the patent documents cited in  the above-mentioned European search report.
The members are as contained in the European Patent Office EDP file on
The European Patent Office is in no way liable for these particulars which are merely given for the purpose of information.

14-07-2023

| Patent document cited in search report | | Publication date | Patent family member(s) | | Publication date |
|---|---|---|---|---|---|
| US 2005115565 | A1 | 02-06-2005 | BR | PI0407491 A | 14-02-2006 |
| | | | CA | 2515775 A1 | 02-09-2004 |
| | | | EP | 1599383 A2 | 30-11-2005 |
| | | | JP | 4490963 B2 | 30-06-2010 |
| | | | JP | 2007534530 A | 29-11-2007 |
| | | | JP | 2009062041 A | 26-03-2009 |
| | | | US | 2005115565 A1 | 02-06-2005 |
| | | | US | 2012196521 A1 | 02-08-2012 |
| | | | WO | 2004074094 A2 | 02-09-2004 |
| US 5791982 | A | 11-08-1998 | DE | 69803665 T2 | 14-08-2002 |
| | | | EP | 0975518 A1 | 02-02-2000 |
| | | | US | 5791982 A | 11-08-1998 |
| | | | WO | 9846483 A1 | 22-10-1998 |
| US 4057205 | A | 08-11-1977 | NONE | | |
| US 2004112211 | A1 | 17-06-2004 | US | 2004112211 A1 | 17-06-2004 |
| | | | US | 2005160909 A1 | 28-07-2005 |

EPO FORM P0459

For more details about this annex : see Official Journal of the European Patent Office, No. 12/82

**REFERENCES CITED IN THE DESCRIPTION**

**Patent documents cited in the description**

- US 63323266